# EUROPÄISCHE PATENTSCHRIFT

(11) **EP 3 084 380 B1**
(45) Veröffentlichungstag und Bekanntmachung des Hinweises auf die Patenterteilung: **17.06.2020**
(21) Anmeldenummer: 14802371.6
(22) Anmeldetag: 14.11.2014
(51) Int. Cl.: G01L 9/00, G01L 19/00, G01L 19/14

(54) **RELATIVDRUCKSENSOR**
RELATIVE PRESSURE SENSOR
CAPTEUR DE PRESSION RELATIVE

(30) Priorität: 20.12.2013 DE 102013114608
(43) Veröffentlichungstag der Anmeldung: 26.10.2016
(73) Patentinhaber: Endress+Hauser SE+Co. KG, 79689 Maulburg (DE)
(72) Erfinder: RUPP, Armin, 79576 Weil am Rhein (DE); SCHONHARDT, Raphael, D-79618 Rheinfelden (DE); HÜGEL, Michael, 79541 Lörrach (DE)
(74) Vertreter: Andres, Angelika Maria
(86) Internationale Anmeldenummer: PCT/EP2014/074650
(87) Internationale Veröffentlichungsnummer: WO 2015/090766

(56) Entgegenhaltungen:
- EP-A1- 0 915 326
- EP-A1- 0 984 257
- WO-A2-03/058186

## Beschreibung

Die vorliegende Erfindung betrifft einen Relativdrucksensor. Relativdrucksensoren für die Prozessmesstechnik umfassen gewöhnlich eine Druckmesszelle, welche in einem Gehäuse angeordnet und frontseitig mit einem zu messenden Medium, dessen Druck zu messen ist, beaufschlagbar ist, wobei in der Druckmesszelle rückseitig über einen Referenzluftpfad der Umgebungsdruck zugeführt wird, damit die Druckmessung bestimmungsgemäß in Bezug zur Umgebungsdruck durchgeführt werden kann.

Die Konstruktion von Messgeräten im allgemeinen und Relativdrucksensoren im besonderen unterliegt immer häufiger den Zwang den Anforderungen einer Plattform zu entsprechen, um einerseits Kosten zu sparen und andererseits Entwicklungszeiten für Modifikationen innerhalb einer Plattform zu verkürzen. Damit ergibt sich der Bedarf, eine Druckmesszelle, insbesondere eine keramische Druckmesszelle, in einer Vielzahl von Konstruktionen flexibel einsetzen zu können. Eine keramische Druckmesszelle hat aber vergleichsweise lange Entwicklungszeiten, so dass eine schnelle Anpassung an neue konstruktive Anforderungen, wie eine Variation in einer Gehäuseform, nicht zu leisten ist. Insbesondere sind elektrische Anschlüsse für einen elektromechanischen Wandler einer Druckmesszelle bzw. die Lage eines Referenzluftkanals einer Relativdruckmesszelle bei einer Gerätekonstruktion als gegeben hinzunehmen.

Ein herkömmlicher Relativdrucksensor ist in WO03/058186 beschrieben.

Es besteht daher Bedarf an einem Konstruktionsprinzip für einen Relativdrucksensor, welches eine hinreichende Flexibilität ermöglicht. Es ist daher die Aufgabe der vorliegenden Erfindung, einen Relativdrucksensor bereitzustellen, der diesem Konstruktionsprinzip genügt. Die Aufgabe wird erfindungsgemäß gelöst durch den Relativdrucksensor gemäß dem unabhängigen Patentanspruch 1.

Der erfindungsgemäße Relativdrucksensor umfasst: eine Druckmesszelle mit einer Messmembran und einem Grundkörper, wobei die Messmembran unter Bildung einer Messkammer zwischen dem Grundkörper und der Messmembran mit dem Grundkörper druckdicht verbunden ist, wobei die Messkammer über einen Referenzdruckkanal, der sich von der Messkammer durch den Grundkörper zu einer der Messkammer abgewandten Rückseite des Grundkörpers erstreckt, mit einem Referenzdruck beaufschlagbar ist; einen Spannring; und ein Gehäuse, welches mindestens einen Gehäusekörper mit einer Messzellenkammer in seinem Inneren aufweist, wobei die Druckmesszelle in der Messzellenkammer angeordnet und mit dem Spannring, der sich mit dem Gehäusekörper im Eingriff befindet, axial eingespannt ist, wobei das Gehäuse eine Referenzluftöffnung aufweist, wobei der Referenzdruckkanal mit der Referenzluftöffnung über einem Referenzluftpfad kommuniziert, der durch die Messzellenkammer verläuft und ein von dem Volumen der Messzellenkammer abgetrenntes Pfadvolumen aufweist, wobei der Referenzluftpfad einen Abschnitt aufweist, der entlang der Rückseite des Grundkörpers verläuft, wobei der Abschnitt durch einen Führungskörper und die Rückseite des Grundkörpers begrenzt ist, wobei der Führungskörper, gegen die Rückseite des Grundkörpers eingespannt ist und eine Öffnung des Referenzdruckkanals in der Rückseite des Grundkörpers überdeckt.

In einer Weiterbildung der Erfindung weist der Führungskörper einen zumindest teilweise thermoelastischen Werkstoff auf.

In einer Weiterbildung der Erfindung weist der Führungskörper an seiner dem Grundkörper zugewandten Unterseite vorstehende Dichtkonturen auf, welche an der Rückseite des Grundkörpers anliegen, wobei die Dichtkonturen den Abschnitt des Referenzluftpfads gegen das Volumen der Messzellenkammer abdichten.

In einer Weiterbildung der Erfindung weist der Führungskörper in einem ersten Endabschnitt eine Öffnung auf, an welche eine Referenzluftleitung angeschlossen ist, durch welche der Abschnitt des Referenzluftpfads mit der Referenzluftöffnung kommuniziert.

In einer Weiterbildung der Erfindung weist die Referenzluftleitung einen formsteifen Werkstoff auf, insbesondere einen Thermoplasten, ein Metall, ein Glas oder eine Keramik.

In einer Weiterbildung der Erfindung weist die Druckmesszelle einen Wandler zum Wandeln einer druckabhängigen Verformung der Messmembran in ein elektrisches Signal auf, insbesondere einen kapazitiven Wandler, wobei der Wandler über mindestens eine elektrische Leiterbahn, die auf der Rückseite des Gegenkörpers präpariert ist, kontaktiert ist, wobei die Leiterbahn durch den Führungskörper von dem Referenzluftpfad getrennt ist, so dass die Leiterbahn außerhalb des Referenzluftpfads verläuft.

In einer Weiterbildung der Erfindung weist die Referenzluftöffnung einen axialen Abstand zur Rückseite des Gegenkörpers auf, wobei die Länge der Referenzluftleitung nicht mehr als das 1,5-fache, insbesondere nicht mehr als 1,2-fache, und insbesondere nicht mehr als das 1,1-fache des axialen Abstands zwischen der Referenzluftöffnung und der Rückseite des Gegenkörpers beträgt.

In einer Weiterbildung der Erfindung tritt der Referenzdruckkanal an einer ersten azimutalen Position aus der Rückseite des Grundkörpers aus, wobei die Referenzluftöffnung des Gehäuses eine zweite azimutale Position aufweist, welche von der ersten azimutalen Position verschieden ist, wobei sich der Abschnitt des Referenzluftpfads, der zwischen dem Führungskörper und dem Grundkörper erstreckt, von der ersten azimutalen Position mindestens bis zur zweiten azimutalen Position verläuft.

In einer Weiterbildung der Erfindung umfasst der Relativdrucksensor weiterhin einen Entkopplungsring; wobei der Entkopplungsring zwischen dem Spannring und der Rückseite des Grundkörpers eingespannt ist.

In einer Weiterbildung der Erfindung weist der Entkopplungsring an seiner dem Grundkörper abgewandten Oberseite eine sich radial einwärts erstreckende Schulter auf, mit welcher der Führungskörper im Nebenschluss gegen den Grundkörper eingespannt ist.

Relativdrucksensor nach einem der vorhergehenden Ansprüche, wobei das Pfadvolumen des Referenzluftpfads nicht mehr als 2% vorzugsweise nicht mehr als 0,5% und bevorzugt nicht mehr als 0,25% der dritten Potenz einer Länge des Referenzluftpfads zwischen der Referenzluftöffnung des Gehäuses und der Mündung des Referenzdruckkanals an der Rückseite des Grundkörpers beträgt.

Die Erfindung wird nun anhand der in den Zeichnungen dargestellten Ausführungsbeispiele näher erläutert. Es zeigt:
- Fig. 1:: eine Explosionszeichnung des erfindungsgemäßen Relativdrucksensors; und
- Fig. 2:: perspektivische Detailansichten von Komponenten des erfindungsgemäßen Relativdrucksensors.

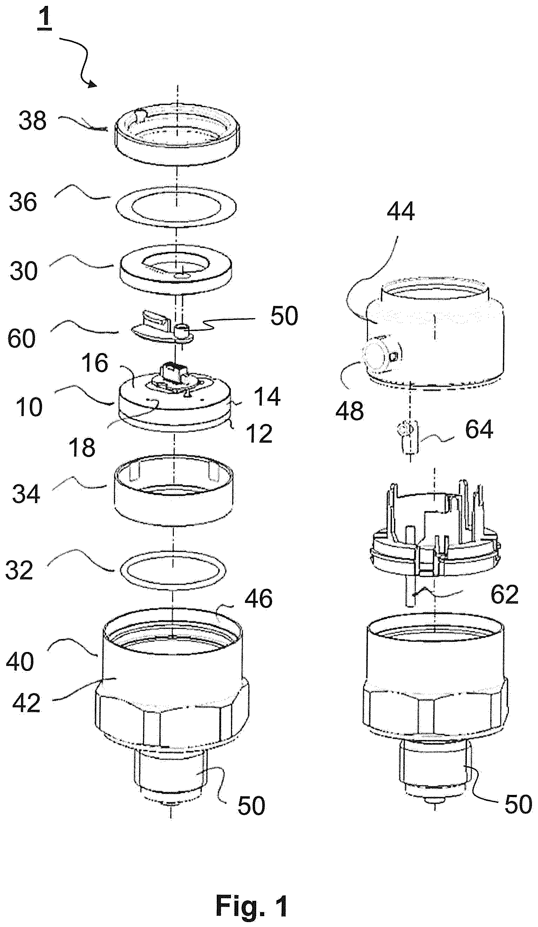

Der in Fig. 1 dargestellte Relativdrucksensor 1 umfasst eine keramische Relativdruckmesszelle 10, die eine kreisscheibenförmige Messmembran 12 und einen Gegenkörper 14 aufweist, wobei die Messmembran 12 und der Gegenkörper unter Bildung einer Messkammer miteinander gefügt sind. Die Messkammer ist über einen Referenzluftkanal 18, welcher an einer der Messmembran abgewandten Rückseite 16 des Gegenkörpers 14 aus dem Gegenkörper austritt. Der Relativdrucksensor 1 umfasst weiterhin ein Gehäuse 40 mit einem Gehäusekörper 42 der in seinem Inneren eine Messzellenkammer 46 aufweist, in welche die Relativdruckmesszelle 10 eingesetzt ist. Hierbei wird zwischen der Messmembran 12 und eine nicht dargestellten Dichtfläche in der Gehäusekammer 46 ein Dichtring 32 elastisch eingespannt, wobei die Relativdruckmesszelle 10 und der Dichtring durch einen Ring 34, welcher Kunststoff aufweist lateral geführt werden. Die Relativdruckmesszelle 10 ist in der Messzellenkammer mittels eines Einspannrings 38, welcher in ein Gewinde in der Messzellenkammer 46 eingeschraubt ist, gegen den elastischen Dichtring 32 eingespannt, wobei zwischen der Rückseite des Gegenkörpers 14 Druckmesszelle 10 und dem Einspannring 38 noch einen Entkopplungsring 30 und eine Gleitfolie 36 angeordnet sind. Der Entkopplungsring 30 weist den gleichen Werkstoff wie der Gegenkörper 14 Druckmesszelle auf, insbesondere Korund, und liegt direkt auf der Rückseite 16 des Gegenkörpers 14 auf. Die Gleitfolie 36 ist zwischen dem Entkopplungskörper 30 und dem Einspannring 38, welcher ein Metall, insbesondere Messing aufweist, eingespannt, um Reibungskräfte zwischen dem Entkopplungskörper und dem Einspannring zu minimieren.

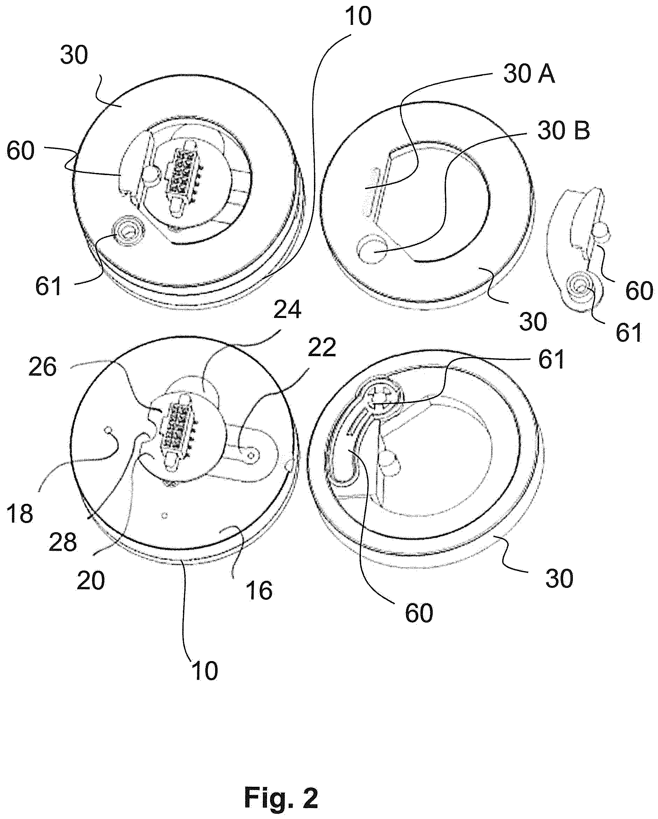

Um den Referenzluftkanal 18 über einen definierten Referenzluftpfad, welcher ein kleines abgeschlossenes Volumen aufweist, mit Referenzluft beaufschlagen zu können sind mehrere Komponenten vorgesehen, die zusammenwirken, und die einfach zu montieren sind. Einzelheiten dazu werden nun im Zusammenhang mit Fign. 1 und 2 näher erläutert. Der Referenzluftpfad umfasst zunächst einen Führungskörper 60 aus einem elastischen Werkstoff, beispielsweise einem Kautschuk, wobei der Führungskörper 60 an seiner dem Gegenkörper zugewandten Unterseite eine Rinne aufweist, die durch Aufsetzen auf die Rückseite 16 des Gegenkörpers 14 zusammen mit dem Gegenkörper wie ein geschlossener Leitungsabschnitt wirkt. Der Führungskörper 60 kann in der Rinne abschnittsweise eine oder mehrere in Längsrichtung verlaufende Stützrippen aufweisen, damit die Rinne nicht unter der Einspannkraft so weit zusammengedrückt wird, dass der Leitungsabschnitt unterbrochen wird. Der Leitungsabschnitt hat die Form eines Kreisbogens, welche sich von der Austrittsöffnung des Referenzluftkanals 18 an der Rückseite 16 des Gegenkörpers 14 zu einem Anschlusspunkt erstreckt, an dem eine in axialer Richtung verlaufende Referenzluftleitung 62 von einer Referenzluftöffnung 48 in dem Gehäuse 40 zur Relativdruckmesszelle 10 geführt wird. Um die Referenzluftleitung 62, welche insbesondere einen formsteifen Kunststoff aufweist, aufnehmen zu können, weist der Führungskörper 60 an seiner Oberseite eine von einem elastischen Rand umgebene Öffnung 61 auf in welche ein unterer Endabschnitt der Referenzluftleitung 62 eingesteckt werden kann. Um den vergleichsweise weichen Führungskörper 60 definiert bezüglich des Referenzluftkanals 18 zu positionieren, und ihn zudem mit einer definierten Einspannkraft gegen die Rückseite 16 des Gegenkörpers 14 einzuspannen, weist der Entkopplungskörper 30 an seiner Oberseite eine sich radial einwärts erstreckende Schulter 30 A auf, mit welcher ein Abschnitt des Führungskörpers 60, welcher die Rinne aufweist, gegen den Gegenkörper 14 eingespannt ist. Um die Montage zu erleichtern, weist der Führungskörper 60 einen Fortsatz auf, welche die radiale Schulter 30 A umgreift, sowie einen axialen Vorsprung, welcher den elastischen Rand um die Öffnung 61 bildet, und welcher sich im Klemmsitz durch eine Bohrung 30 B in der radialen Schulter 30 A erstreckt. Durch diese Strukturelemente ist der Führungskörper 60 definiert an dem Entkopplungskörper 30 zu montieren, bevor die beiden Teile zusammen in die Messzellenkammer 46 eingesetzt werden. Nach dem Einspannen der Relativdruckmesszelle 10 mit dem Einspannring 38 und den zwischenliegenden Komponenten, kann ein Elektronikträger in die Messzellenkammer eingesetzt werden, wobei die Referenzluftleitung 62 an dem Elektronikträger angeordnet ist und durch Montage des Elektronikträger automatisch mit seinem unteren Ende in die Öffnung 61 des Führungskörpers geschoben wird. Zur Vervollständigung des Referenzluftpfads ist noch ein Winkelstück 64 auf das obere Ende der Referenzluftleitung 62 aufzusetzen, welches dann mit einer Referenzluftöffnung 48 in einer Mantelfläche eines zweiten Gehäusekörpers 44 kommuniziert, welcher auf dem ersten Gehäusekörper 42 aufzusetzen ist.

Der Vollständigkeit halber sei noch erwähnt, dass das Gehäuse 40 an seinem unteren, ersten Gehäusekörper 42 beliebige Prozessanschlüsse aufweisen kann, über welche die Druckmesszelle mit einem zu messenden Druck beaufschlagbar ist. In Fig. 1 ist beispielsweise ein Prozessanschlusszapfen mit einem Gewinde dargestellt.

Unter Bezugnahme auf Fig. 2 werden nun weitere Details der Erfindung erläutert.

Die Druckmesszelle 10 weist einen kapazitiven Wandler auf, welche insbesondere als Differenzialkondensator geschaltet ist, wobei er zwei gegenkörperseitige Elektroden aufweist, deren Potenziale über Durchführungen zur Rückseite 16 des Gegenkörpers zu führen sind, und dann über Leiterbahnen 22, 24 einer Vorverarbeitungsschaltung 20 zuzuführen sind. Die Vorverarbeitungsschaltung 20 ist in einem kompakten Hybrid auf der Rückseite 16 der Druckmesszelle angeordnet, um die Signalpfade für die Rohsignale des Differentialkondensators so kurz wie möglich zu halten. Im Sinne einer einfachen Montage weist der Hybrid ein Steckverbinderelement 26 auf, über welches einerseits vorverarbeitete, digitalisierte Messsignale ausgegeben werden können und andererseits der Hybrid mit Energie versorgt wird. Eine Aussparung 28 in einem Trägerkörper des Steckverbinderelements 26 gibt eine Orientierung für einen Vorsprung am Führungskörper 60, so dass der Führungskörper korrekt bezüglich des Referenzluftkanals 18 positioniert wird. Durch die Führung der Referenzluft in dem definierten Referenzluftpfad wird verhindert, dass Feuchte aus der Referenzluft auf den Leiterbahnen 22,24 an der Rückseite des Gegenkörpers kondensieren kann, wodurch eine Messung beeinträchtigt würde. Weiterhin führt das begrenzte Volumen des Referenzluftpfades, welches vorzugsweise weniger als ein halbes Prozent des Volumens der Messzellenkammer beträgt dazu, dass Temperaturschwankungen, die in einer Prozessumgebung nahezu unvermeidlich sind und die damit einhergehende Volumenänderung eines eingeschlossenen Gases für den Referenzluftpfad nur zu einem minimalen Volumenhub führen, so dass hierdurch kaum nennenswerte Luftmassen durch die Referenzluftöffnung 48 bewegt werden müssen.

## Patentansprüche

1. Relativdrucksensor (1), umfassend:
eine Druckmesszelle (10) mit einer Messmembran (12) und einem Grundkörper (14), wobei die Messmembran (12) unter Bildung einer Messkammer zwischen dem Grundkörper (14) und der Messmembran (12) mit dem Grundkörper druckdicht verbunden ist,
wobei die Messkammer über einen Referenzdruckkanal (18), der sich von der Messkammer durch den Grundkörper (14) zu einer der Messkammer abgewandten Rückseite (16) des Grundkörpers erstreckt, mit einem Referenzdruck beaufschlagbar ist;
einen Spannring (38); und
ein Gehäuse (40), welches mindestens einen Gehäusekörper (42) mit einer Messzellenkammer (46) in seinem Inneren aufweist, wobei die Druckmesszelle (10) in der Messzellenkammer (46) angeordnet und mit dem Spannring (38), der sich mit dem Gehäusekörper im Eingriff befindet, axial eingespannt ist,
wobei das Gehäuse eine Referenzluftöffnung (48) aufweist, wobei der Referenzdruckkanal (18) mit der Referenzluftöffnung (48) über einem Referenzluftpfad kommuniziert, der durch die Messzellenkammer verläuft und ein von dem Volumen der Messzellenkammer abgetrenntes Pfadvolumen aufweist, wobei der Referenzluftpfad einen Abschnitt aufweist, der entlang der Rückseite des Grundkörpers verläuft, wobei der Abschnitt durch einen Führungskörper (60) und die Rückseite des Grundkörpers (14) begrenzt ist, wobei der Führungskörper gegen die Rückseite des Grundkörpers eingespannt ist und eine Öffnung des Referenzdruckkanals (18) in der Rückseite des Grundkörpers überdeckt.

2. Relativdrucksensor nach Anspruch 1, wobei der Führungskörper einen zumindest teilweise thermoelastischen Werkstoff aufweist.

3. Relativdrucksensor nach Anspruch 1 oder 2, wobei der Führungskörper an seiner dem Grundkörper zugewandten Unterseite vorstehende Dichtkonturen, welche an der Rückseite des Grundkörpers anliegen, aufweist, wobei die Dichtkonturen den Abschnitt des Referenzluftpfads gegen das Volumen der Messzellenkammer abdichten.

4. Relativdrucksensor nach einem der vorhergehenden Ansprüche, wobei der Führungskörper in einem ersten Endabschnitt eine Öffnung aufweist, an welche eine Referenzluftleitung angeschlossen ist, durch welche der Abschnitt des Referenzluftpfads mit der Referenzluftöffnung kommuniziert.

5. Relativdrucksensor nach Anspruch 4, wobei die Referenzluftleitung einen formsteifen Werkstoff umfasst.

6. Relativdrucksensor nach Anspruch 5, wobei die Druckmesszelle einen Wandler zum Wandeln einer druckabhängigen Verformung der Messmembran in ein elektrisches Signal aufweist, wobei der Wandler über mindestens eine elektrische Leiterbahn, die auf der Rückseite des Gegenkörpers präpariert ist, kontaktiert ist, wobei die Leiterbahn durch den Führungskörper von dem Referenzluftpfad getrennt ist.

7. Relativdrucksensor nach Anspruch 4 oder 5 oder einem von den Ansprüchen 4 oder 5 abhängigen Anspruch, wobei die Referenzluftöffnung einen axialen Abstand zur Rückseite des Gegenkörpers aufweist, wobei die Länge der Referenzluftleitung nicht mehr als das 1,5-fache des axialen Abstands zwischen der Referenzluftöffnung und der Rückseite des Gegenkörpers beträgt.

8. Relativdrucksensor nach einem der vorhergehenden Ansprüche, wobei der Referenzdruckkanal an einer ersten azimutalen Position aus der Rückseite des Grundkörpers austritt und wobei die Referenzluftöffnung des Gehäuses eine zweite azimutale Position aufweist, welche von der ersten azimutalen Position verschieden ist, wobei sich der Abschnitt des Referenzluftpfads, der zwischen dem Führungskörper und dem Grundkörper erstreckt, von der ersten azimutalen Position mindestens bis zur zweiten azimutalen Position verläuft.

9. Relativdrucksensor nach einem der vorhergehenden Ansprüche, weiter umfassend einen Entkopplungsring (30); wobei der Entkopplungsring (30) zwischen dem Spannring (38) und der Rückseite (16) des Grundkörpers (14) eingespannt ist.

10. Relativdrucksensor nach einem der vorhergehenden Ansprüche, wobei der Führungskörper im Nebenschluss gegen die Rückseite des Grundkörpers eingespannt ist.

11. Relativdrucksensor nach Anspruch 9 und 10, wobei der Entkopplungsring (30) an seiner dem Grundkörper abgewandten Oberseite eine sich radial einwärts erstreckende Schulter aufweist, mit welcher der Führungskörper im Nebenschluss gegen den Grundkörper eingespannt ist.

12. Relativdrucksensor nach einem der vorhergehenden Ansprüche, wobei das Pfadvolumen des Referenzluftpfads nicht mehr als 2% der dritten Potenz einer Länge des Referenzluftpfads zwischen der Referenzluftöffnung (48) des Gehäuses und der Mündung des Referenzdruckkanals (18) an der Rückseite (16) des Grundkörpers (14) beträgt.

13. Relativdrucksensor nach Anspruch 12, wobei das Pfadvolumen des Referenzluftpfads nicht mehr als 0,5% der dritten Potenz einer Länge des Referenzluftpfads zwischen der Referenzluftöffnung (48) des Gehäuses und der Mündung des Referenzdruckkanals (18) an der Rückseite (16) des Grundkörpers (14) beträgt.

14. Relativdrucksensor nach Anspruch 6, wobei der Wandler einen kapazitiven Wandler umfasst.

15. Relativdrucksensor nach Anspruch 5, wobei der formsteife Werkstoff einen Thermoplasten, ein Metall, ein Glas oder eine Keramik umfasst.

## Claims

1. Relative pressure sensor (1), comprising:
a pressure measuring cell (10) with a measuring membrane (12) and a meter body (14), wherein the measuring membrane (12) is connected in a pressure-tight manner to the meter body by forming a measuring chamber between the meter body (14) and the measuring membrane (12),
wherein the measuring chamber can be exposed to a reference pressure by means of a reference pressure channel (18), which extends from the measuring chamber through the meter body (14) to a rear side (16) of the meter body facing away from the measuring chamber;
a clamping ring; and
a housing (40), which has at least a housing body (42) with a measuring cell chamber (46) in its interior, wherein the pressure measuring cell (10) is arranged in the measuring cell chamber (46) and is clamped axially with the clamping ring (38), which is engaged with the housing body,
wherein the housing has a reference air opening (48), wherein the reference pressure channel (18) communicates with the reference air opening (48) via a reference air path, which extends through the measuring cell chamber and has a path volume which is separate from the volume of the measuring chamber,
wherein the reference air path has a section, which extends along the rear side of the meter body, wherein the section is limited by a guide body (60) and the rear side of the meter body, wherein the guide body is clamped against the rear side of the meter body and covers over an opening of the reference pressure channel (18) in the rear side of the meter body.

2. Relative pressure sensor as claimed in Claim 1, wherein the guide body at least partially has a thermoelastic material.

3. Relative pressure sensor as claimed in Claim 1 or 2, wherein the guide body has projecting sealing contours on its underside facing towards the meter body that rest against the rear side of the meter body, wherein the sealing contours seal the section of the reference air path against the volume of the measuring cell chamber.

4. Relative pressure sensor as claimed in one of the previous claims, wherein the guide body has an opening in a first end section, wherein a reference air line is connected to said opening through which the section of the reference air path communicates with the reference air opening.

5. Relative pressure sensor as claimed in Claim 4, wherein the reference air line comprises a rigid material.

6. Relative pressure sensor as claimed in Claim 5, wherein the pressure measuring cell has a converter for converting a pressure-dependent deformation of the measuring membrane to an electrical signal, wherein the converter is contacted by means of at least one electric conductor track, which is prepared on the rear side of the counterbody, wherein the conductor track is separated from the reference air path by the guide body.

7. Relative pressure sensor as claimed in Claim 4 or 5 or in a claim dependent on Claims 4 or 5, wherein the reference air opening has an axial distance in relation to the rear side of the counterbody, wherein the length of the reference air line is not more than 1.5 times the axial distance between the reference air opening and the rear side of the counterbody.

8. Relative pressure sensor as claimed in one of the previous claims, wherein the reference pressure channel exits from the rear side of the meter body at a first azimuthal position and the reference air opening of the housing has a second azimuthal position, which is different from the first azimuthal position, wherein the section of the reference air path, which extends between the guide body and the meter body, runs from the first azimuthal position at least to the second azimuthal position.

9. Relative pressure sensor as claimed in one of the previous claims, further comprising a decoupling ring (30), wherein the decoupling ring (30) is clamped between the clamping ring (38) and the rear side (16) of the meter body (14).

10. Relative pressure sensor as claimed in one of the previous claims, wherein the guide body is clamped in a bypass against the rear side of the meter body.

11. Relative pressure sensor as claimed in Claim 9 and 10, wherein the decoupling ring (30) has, on its top side facing away from the meter body, a shoulder extending radially inwards with which the guide body is clamped in the bypass against the meter body.

12. Relative pressure sensor as claimed in one of the previous claims, wherein the path volume of the reference air path is not more than 2 % of the cube of a length of the reference air path between the reference air opening (48) of the housing and the mouth of the reference pressure channel (18) on the rear side (16) of the meter body (14).

13. Relative pressure sensor as claimed in Claim 12, wherein the path volume of the reference air path is not more than 0.5 % of the cube of a length of the reference air path between the reference air opening (48) of the housing and the mouth of the reference pressure channel (18) on the rear side (16) of the meter body (14).

14. Relative pressure sensor as claimed in Claim 6, wherein the converter comprises a capacitive converter.

15. Relative pressure sensor as claimed in Claim 5, wherein the rigid material comprises a thermoplastic, a metal, a glass or a ceramic.

## Revendications

1. Capteur de pression relative (1), comprenant :
une cellule de mesure de pression (10) avec une membrane de mesure (12) et un corps de base (14), la membrane de mesure (12) étant reliée de façon étanche à la pression avec le corps de base en formant une chambre de mesure entre le corps de base (14) et la membrane de mesure (12),
la chambre de mesure pouvant être alimentée avec une pression de référence par l'intermédiaire d'un canal de pression de référence (18), qui s'étend de la chambre de mesure à travers le corps de base (14) vers une face arrière du corps de base située à l'opposé de la chambre de mesure ;
un anneau de serrage ; et
un boîtier (40), lequel comporte au moins un corps de boîtier (42) avec une chambre de cellule de mesure (46) dans son intérieur, la cellule de mesure de pression (10) étant disposée dans la chambre de cellule de mesure (46) et serrée axialement au moyen de l'anneau de serrage (38), qui est en prise avec le corps de boîtier,
le boîtier présentant une ouverture d'air de référence (48), le canal d'air de référence (18) communiquant avec l'ouverture d'air de référence (48) par l'intermédiaire d'un trajet d'air de référence, qui traverse la chambre de cellule de mesure et présente un volume du trajet séparé du volume de la chambre de mesure, le trajet d'air de référence présentant une section, qui s'étend le long de la face arrière du corps de base, la section étant limitée par un corps de guidage (60) et la face arrière du corps de base, le corps de guidage étant serré contre la face arrière du corps de base et recouvrant une ouverture du canal de pression de référence (18) dans la face arrière du corps de base.

2. Capteur de pression relative selon la revendication 1, pour lequel le corps de guidage comprend au moins partiellement un matériau thermoélastique.

3. Capteur de pression relative selon la revendication 1 ou 2, pour lequel le corps de guidage présente, sur sa face inférieure faisant face au corps de base, des contours d'étanchéité en saillie, lesquels sont appliqués contre la face arrière du corps de base, les contours d'étanchéité assurant l'étanchéité de la section du trajet d'air de référence par rapport au volume de la chambre de cellule de mesure.

4. Capteur de pression relative selon l'une des revendications précédentes, pour lequel le corps de guidage présente dans une première partie d'extrémité une ouverture, au niveau de laquelle une conduite d'air de référence est raccordée, conduite à travers laquelle la section du trajet d'air de référence communique avec l'ouverture d'air de référence.

5. Capteur de pression relative selon la revendication 4, pour lequel la conduite d'air de référence comprend un matériau de forme rigide.

6. Capteur de pression relative selon la revendication 5, pour lequel la cellule de mesure de pression comporte un convertisseur destiné à la conversion d'une déformation fonction de la pression de la membrane de mesure en un signal électrique, le convertisseur étant en contact par l'intermédiaire d'au moins une piste conductrice électrique, laquelle est préparée sur la face arrière du contre-corps, la piste conductrice étant séparée par le corps de guidage par rapport au trajet d'air de référence.

7. Capteur de pression relative selon la revendication 4 ou 5 ou l'une des revendications dépendant des revendications 4 ou 5, pour lequel l'ouverture d'air de référence présente une distance axiale par rapport à la face arrière du contre-corps, la longueur de la conduite d'air de référence n'étant pas supérieure à 1,5 fois la distance axiale entre l'ouverture d'air de référence et la face arrière du contre-corps.

8. Capteur de pression relative selon l'une des revendications précédentes, pour lequel le canal de pression de référence sort de la face arrière du corps de base au niveau d'une première position azimutale et l'ouverture d'air de référence du boîtier présentant une deuxième position azimutale, laquelle est différente de la première position azimutale, la section du trajet d'air de référence, qui s'étend entre le corps de guidage et le corps de base, allant de la première position azimutale au moins jusqu'à la deuxième position azimutale.

9. Capteur de pression relative selon l'une des revendications précédentes, comprenant en outre un anneau de découplage (30), l'anneau de découplage (30) étant serré entre l'anneau de serrage (38) et la face arrière (16) du corps de base (14).

10. Capteur de pression relative selon l'une des revendications précédentes, pour lequel le corps de guidage est serré dans la dérivation contre la face arrière du corps de base.

11. Capteur de pression relative selon la revendication 9 et 10, pour lequel l'anneau de découplage (30) présente, sur sa face supérieure située à l'opposé du corps de base, un épaulement s'étendant radialement vers l'intérieur, épaulement avec lequel le corps de guidage est serré dans la dérivation contre le corps de base.

12. Capteur de pression relative selon l'une des revendications précédentes, pour lequel le volume du trajet d'air de référence ne représente pas plus de 2 % du cube d'une longueur du trajet d'air de référence entre l'ouverture d'air de référence (48) du boîtier et l'orifice du canal de pression de référence (18) sur la face arrière (16) du corps de base (14).

13. Capteur de pression relative selon la revendication 12, pour lequel le volume du trajet d'air de référence ne représente pas plus de 0,5 % du cube d'une longueur du trajet d'air de référence entre l'ouverture d'air de référence (48) du boîtier et l'orifice du canal de pression de référence (18) sur la face arrière (16) du corps de base (14).

14. Capteur de pression relative selon la revendication 6, pour lequel le convertisseur comprend un convertisseur capacitif.

15. Capteur de pression relative selon la revendication 5, pour lequel le matériau de forme rigide comprend un thermoplastique, un métal, un verre ou une céramique.
